# FASCICULE DE BREVET EUROPEEN

(11) **EP 2 780 161 B1**
(45) Date de publication et mention de la délivrance du brevet: **05.06.2019**
(21) Numéro de dépôt: 12795528.4
(22) Date de dépôt: 13.11.2012
(51) Int. Cl.: B32B 17/10, E06B 3/54, G01N 21/21, E06B 3/66

(54) **BOMBAGE A FROID D'UN VITRAGE FEUILLETE**
KALTBIEGEN EINER VERBUNDVERGLASUNG
COLD BENDING OF A LAMINATED GLAZING

(30) Priorité: 17.11.2011 FR 1160473
(43) Date de publication de la demande: 24.09.2014
(60) Demande divisionnaire: 19169920.6
(73) Titulaire: Saint-Gobain Glass France, 92400 Courbevoie (FR)
(72) Inventeur: LEVASSEUR, Fabien, F-59200 Tourcoing (FR); DECOURCELLE, Romain, F-60200 Compiegne (FR); SWIDERSKI, Christophe, F-02700 Amigny-rouy (FR)
(74) Mandataire: Saint-Gobain Recherche
(86) Numéro de dépôt international: PCT/FR2012/052607
(87) Numéro de publication internationale: WO 2013/072611

(56) Documents cités:
- EP-A- 0 282 468
- WO-A-98/01649
- DE-A1- 19 519 504
- DE-A1-102008 031 770
- FR-A- 2 676 049
- NL-C- 1 029 935
- Michael J. Zickel, Jon R. Lesniak, Daryl J. trate, Ray LaBrecque, and Ken Harkins: "Residual Stress measurement of Automobile Windshields Using The Grey-field Polariscope", , 9 juin 1999 (1999-06-09), XP002677516, Extrait de l'Internet: URL:www.stressphotonics.com/PSA/psa_pdfs/S EM99Windshield.pdf [extrait le 2012-06-12]

## Description

L'invention concerne un procédé pour le bombage à froid d'un panneau comprenant un vitrage feuilleté.

Un vitrage feuilleté comprend plusieurs substrats verriers séparés par un intercalaire en matériau polymère. Un substrat verrier comprend une seule feuille de verre minéral le cas échéant recouverte d'une ou plusieurs couches du type anti-reflet, antisolaire, anti-abrasion, etc..

La réalisation de vitrages feuilletés plans est bien maitrisée. La réalisation de vitrages bombés est beaucoup plus délicate et d'autant plus délicate que les courbures à conférer sont importantes. Si les courbures sont élevées le bombage à chaud au préalable des feuilles de verre alors que le verre est ramolli (à plus de 500°C en général) peut être nécessaire. Si les courbures d'un vitrage sont peu importantes, on peut envisager de le bomber à froid après la fin de sa fabrication. L'expression « bombage à froid » signifie généralement à moins de 200°C, température à laquelle le verre n'est pas ramolli.

Les NL1029935C2 et WO9801649 enseignent le bombage à la température ambiante d'un vitrage feuilleté. Le EP282468 enseigne le bombage entre 80 et 140°C d'un vitrage feuilleté comprenant un substrat verrier trempé. Le chauffage entre 80 et 140°C sert à ramollir le PVB intercalaire du vitrage feuilleté.

On a maintenant découvert que le bombage à froid au-dessus de 80°C conduit à un vieillissement inacceptable de l'intercalaire en matériau polymère qui se traduit par la formation de bulles fines mais visibles à l'oeil nu et par ailleurs que l'on pouvait avantageusement réaliser le bombage à froid entre 30 et 80°C pour réduire les efforts nécessaires au bombage ainsi que les contraintes de cisaillement entre l'intercalaire en matériau polymère et les substrats verriers et ainsi réduire les risques de délaminage.

L'invention concerne un procédé de bombage d'un panneau comprenant un vitrage feuilleté entre 30 et 80°C. Une température au-dessus de 40°C est particulièrement satisfaisante. Une température en-dessous de 75°C convient généralement. Le domaine de température entre 40 et 75°C est particulièrement adapté. Pour réaliser ce procédé, en pratique, on part d'un panneau plan que l'on chauffe jusqu'à ce que l'intercalaire atteigne le domaine de température préconisé (température de bombage), puis on bombe le panneau. De préférence on chauffe le panneau au-dessus de la température de transition vitreuse de l'intercalaire en matériau polymère. La température de transition vitreuse est déterminée par viscoanalyse avec mesures en cinétique. Le fait de chauffer au-dessus de la transition vitreuse est favorable au fluage du matériau polymère pendant le bombage, ce qui a pour conséquence que les contraintes permanentes de cisaillement aux interfaces entre ledit matériau et les substrats verriers sont réduites. L'intercalaire en matériau polymère peut notamment être un polyvinyle de butyral (dit « PVB »), un éthylène-acétate de vinyle ou un film de résine ionomère, notamment le SentryGlas commercialisé par DuPont. Pour le cas d'une résine ionomère, on préfère chauffer le panneau à plus de 45°C.

Le bombage à froid du panneau entraine le bombage à froid du vitrage feuilleté du panneau. Le panneau peut comprendre un autre élément que le vitrage feuilleté comme une plaque parallèle au vitrage feuilleté. Notamment, le panneau peut être le vitrage feuilleté lui-même.

Pour chauffer le panneau entre 30 et 80°C, on peut très facilement opérer en juxtaposant un élément chauffant comme par exemple une couverture chauffante au panneau. Comme couverture chauffante, on peut notamment utiliser celles commercialisées par la société Vulcanic. On peut simplement recouvrir le panneau par l'élément chauffant jusqu'à obtention de la température souhaitée et procéder au bombage. On peut laisser l'élément chauffant juxtaposé au panneau pendant le bombage. On peut mettre à chauffer un panneau par l'élément chauffant pendant que l'on procède au bombage d'un autre panneau venant d'être chauffé. Bien entendu, en fonction de la nature du vitrage et de ses dimensions (faces principales et épaisseur), l'homme du métier sait trouver les conditions de chauffage, de durée et de vitesse concernant chaque opération afin d'optimiser le procédé.

Le procédé selon l'invention est adapté au bombage à froid des panneaux comprenant un vitrage feuilleté. Notamment, toutes les feuilles de verre contenues dans le panneau peuvent être trempées. L'invention est particulièrement adaptée au bombage à froid d'un panneau consistant en un vitrage feuilleté comprenant deux feuilles de verre trempées séparées par un intercalaire en matériau polymère.

Notamment l'invention est particulièrement utile pour la réalisation de vitrages devant être montés sur des bâtiments dont des vitrages doivent apparaître courbés. Ces bâtiments, notamment du type tours de quartiers d'affaire peuvent avoir des formes particulièrement audacieuses et nécessiter la réalisation de panneaux courbés dont les formes peuvent être différentes de l'un à l'autre pour un même bâtiment.

Ainsi, l'invention concerne un procédé de préparation d'un module vitré bombé comprenant une armature métallique et un panneau comprenant un vitrage feuilleté comprenant des substrats verriers séparés par un intercalaire en matériau polymère, le panneau étant bombé après assemblage du vitrage feuilleté, par une force lui faisant prendre la forme de l'armature métallique, puis maintenu dans cette forme par un moyen de maintien, le panneau étant chauffé en lui juxtaposant un élément chauffant et le bombage étant réalisé alors que l'intercalaire est à une température comprise entre 30 et 80°C.

On réalise des modules comprenant le panneau comprenant le vitrage feuilleté et une armature métallique capable de maintenir en forme le panneau bombé à froid et faisant donc office de moule. Cette armature métallique est généralement en acier ou en aluminium extrudé. Pour ce faire, on peut préchauffer le panneau entre 30 et 80°C, notamment en le déposant sur une couverture chauffante, puis on l'amène au contact de l'armature métallique et on applique une force au panneau en un ou plusieurs points pour lui faire prendre la forme de l'armature. Les forces appliquées peuvent aller par exemple jusqu'à 200 kg par point d'appui. Pour réaliser cette déformation du panneau, on peut utiliser des tirants, des vérins hydrauliques, des poids, des robots. Le panneau est maintenu en forme sur l'armature par un moyen de maintien comme des pinces ou par une colle, selon le rayon de courbure à maintenir. Bien entendu, s'il s'agit d'un collage, on attend que la colle ait bien pris (par polymérisation, réticulation, etc) avant d'enlever la force d'application du panneau à l'armature. Une colle structurelle adaptée est par exemple celle du type silicone commercialisée par Dow Corning sous la référence DC 3362. Si la courbure à maintenir est importante, l'usage de pinces peut s'imposer. Grâce à l'invention, l'opération de bombage elle-même (entre le début de la déformation et la fin de la déformation du panneau) peut être rapide, notamment entre 10 et 120 secondes.

La déformation « à froid » du panneau ne doit pas être réalisée en générant des contraintes inadmissibles dans les feuilles de verre le composant. Ainsi, la contrainte maximale permanente autorisée dans le bâtiment pour un verre non trempé est de 10 MPa. La contrainte maximale permanente autorisée dans le bâtiment pour un verre trempé est 40 MPa. Selon les courbures à conférer au panneau, on peut donc avoir intérêt à utiliser des feuilles de verre trempées et assemblées dans un vitrage feuilleté.

Notamment, le panneau peut être bombé simultanément selon deux directions différentes (twisted glass).

Les panneaux concernés par l'invention peuvent être grands puisqu'ils peuvent avoir une face principale d'aire supérieure à 3 m² et même supérieure à 4 m² et même supérieure à 5 m². Notons qu'un panneau (ainsi qu'une feuille ou un vitrage) comprend deux faces principales et une tranche.

Il convient lors du bombage de ne pas dépasser les contraintes maximales admissibles du vitrage en utilisation. On a découvert que l'élément le plus critique limitant l'amplitude du bombage était la contrainte de cisaillement aux interfaces entre l'intercalaire en matériau polymère et les substrats verriers qui lui sont juxtaposés. De préférence, on bombe le vitrage feuilleté pour que cette contrainte à 20°C soit inférieure à 3 MPa et de préférence inférieure à 2 MPa et de manière encore préférée inférieure à 1,5 MPa. Comme selon l'invention on chauffe l'intercalaire en matériau polymère à plus de 30°C, la contrainte de cisaillement aux interfaces subie pendant le bombage est bien inférieure à celle pouvant être subie en utilisation lorsque les températures ambiantes baissent. C'est pourquoi avant de réaliser le bombage, il convient par des tests de routine de déterminer si le bombage prévu n'excède pas la contrainte de cisaillement aux interfaces entre l'intercalaire en matériau polymère et les substrats verriers à 20°C. Cette expertise peut être réalisée très simplement par une méthode faisant également l'objet de l'invention. Selon cette méthode, on peut visualiser ces contraintes de cisaillement en juxtaposant au vitrage feuilleté un film polarisant sur l'une de ses faces principales. Après avoir disposé ce film polarisant sur un échantillon du vitrage feuilleté, on procède à un test de traction en tirant d'un côté sur l'un des substrats verriers et de l'autre sur l'autre substrat verrier. L'apparition des contraintes se traduit par une coloration en transmission. La coloration évolue avec l'intensité des contraintes. Il suffit donc de repérer la couleur correspondant à la contrainte maximale autorisé selon le cas (3 ou 2 ou 1,5 ou 1 MPa, ou autre). Cet étalonnage peut être réalisé avec un seul film polarisant juxtaposé à une face principale du vitrage feuilleté. Dans ce cas, il convient d'observer la coloration avec un angle de vision d'environ 45° (angle entre la normale au vitrage et la direction de la vision). On peut aussi placer un film sur chacune des faces principales du vitrage feuilleté, auquel cas on peut visualiser les contraintes avec n'importe quel angle d'observation. Après réalisation de l'étalonnage (pour un intercalaire en matériau polymère donné et une épaisseur donnée dudit intercalaire), on peut facilement vérifier en production des vitrages que les contraintes de cisaillement maximales ne sont pas dépassées en apposant un film polarisant sur une face principale du vitrage ou deux films polarisants, un sur chacune des faces principales du vitrage. Ainsi, l'invention concerne aussi le procédé selon lequel après bombage selon l'invention et retour de l'intercalaire à la température de 20 °C, on évalue l'état des contraintes de cisaillement aux interfaces entre l'intercalaire en matériau polymère et les substrats verriers situés de part et d'autre du matériau polymère en lui étant juxtaposés en appliquant un film polarisant sur une face principale du panneau puis en visualisant la couleur transmise au travers du panneau et du film. On peut ensuite comparer cette couleur avec les couleurs de l'étalonnage préalablement réalisé afin d'évaluer les contraintes de cisaillement aux interfaces entre l'intercalaire en matériau polymère et lesdits substrats verriers et, selon le résultat de cette comparaison, décider de la conformité du module par rapport au cahier des charges, c'est-à-dire valider ou mettre au rebut le module.

La figure 1 représente un dispositif permettant d'appliquer des déformations à un vitrage et de mesurer les contraintes subies.

La figure 2 représente la somme des valeurs absolues des forces mesurées dans deux cas de températures (20 et 70°C) et en fonction de la flèche imposée au vitrage par le dispositif de la figure 1.

La figure 3 montre l'évolution avec le temps de la somme des valeurs absolues des forces dans deux cas de températures d'application de déformations (20 et 70°C).

### EXEMPLES

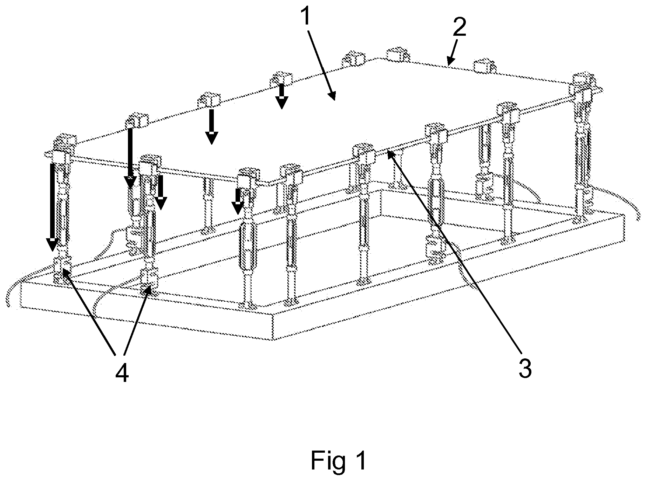

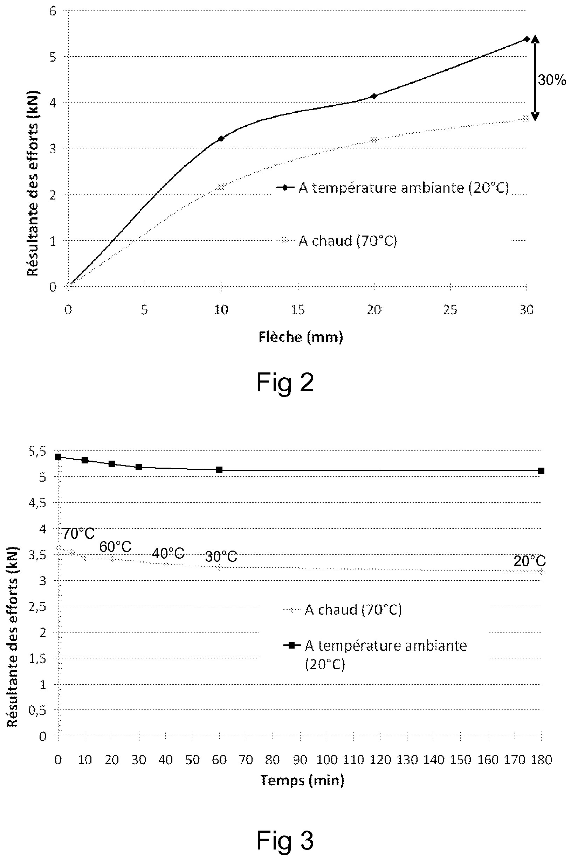

On fabrique un vitrage feuilleté trempé en associant 2 vitrages monolithiques trempés chacun à 120 MPa de mise en compression des peaux, chaque vitrage ayant des dimensions de 1938x876x8 mm, avec 4 intercalaires de PVB (4 fois 0,38 mm d'épaisseur de PVB). Le vitrage est ensuite soumis à une déformation comme représenté par la figure 1. On maintient une largeur 2 et une longueur 3 fixes du vitrage 1 et on applique des déplacements sur les côtés non maintenus fixes comme représenté sur la figure 1 par des vecteurs verticaux dirigés vers le bas. Ceci a été réalisé après avoir porté le vitrage assemblé aux températures de 20°C dans un cas et 70°C dans un autre cas. Des capteurs de force 4 placés sous les tirants exerçant les déplacements, permettent de mesurer les forces appliquées en différents points de la périphérie du vitrage. En certains endroits les forces sont en traction et en d'autres endroits les forces sont en compression, de sorte que la résultante est nulle. On apprécie donc les efforts supportés par le vitrage en additionnant les valeurs absolues des forces. La figure 2 représente la somme des valeurs absolues des forces mesurées dans les deux cas de températures et en fonction de la flèche. On voit que le chauffage à 70°C permet une réduction des efforts de l'ordre de 30%. La figure 3 montre l'évolution de la somme des valeurs absolues des forces en fonction du temps, sachant que pour l'essai avec préchauffage à 70°, le vitrage est immédiatement remis à l'air ambiant à 20°C. On a indiqué en fonction du temps la baisse de température du vitrage entre 70 et 20°C. On voit que la résultante des forces reste bien inférieure dans le cas du préchauffage à 70°C, le gain de 30% étant conservé et même amélioré si l'on compare le vitrage déformé à 20°C et celui déformé à 70°C et revenu à 20°C. L'intercalaire dans le cas du préchauffage à 70°C va en conséquence mieux vieillir, avoir moins tendance à se délaminer et avoir moins tendance à blanchir.

## Revendications

1. Procédé de préparation d'un module vitré bombé comprenant une armature métallique et un panneau comprenant un vitrage feuilleté comprenant des substrats verriers séparés par un intercalaire en matériau polymère, le panneau étant bombé après assemblage du vitrage feuilleté, par une force lui faisant prendre la forme de l'armature métallique, puis maintenu dans cette forme par un moyen de maintien, **caractérisé en ce que** le panneau est chauffé en lui juxtaposant un élément chauffant et le bombage est réalisé alors que l'intercalaire est à une température comprise entre 30 et 80°C.

2. Procédé selon la revendication précédente, **caractérisé en ce que** le bombage est réalisé alors que l'intercalaire est a une température supérieure à 40°C.

3. Procédé selon l'une des revendications précédentes, **caractérisé en ce que** le bombage est réalisé alors que l'intercalaire est a une température inférieure à 75°C.

4. Procédé selon l'une des revendications précédentes, **caractérisé en ce que** l'intercalaire est à une température supérieure à sa température de transition vitreuse pendant le bombage.

5. Procédé selon l'une des revendications précédentes, **caractérisé en ce que** l'intercalaire est un PVB.

6. Procédé selon l'une des revendications précédentes, **caractérisé en ce qu'**au moins un substrat verrier comprend une feuille de verre trempé.

7. Procédé selon la revendication précédente, **caractérisé en ce que** toutes les feuilles de verre de tous les substrats verriers du panneau sont trempées.

8. Procédé selon l'une des revendications précédentes, **caractérisé en ce que** l'élément chauffant est une couverture chauffante.

9. Procédé selon l'une des revendications précédentes, **caractérisé en ce que** le panneau est bombé simultanément selon deux directions différentes.

10. Procédé selon l'une des revendications précédentes, **caractérisé en ce que** le bombage dure entre 10 et 120 secondes.

11. Procédé selon l'une des revendications précédentes, **caractérisé en ce que** le panneau est bombé pour que la contrainte de cisaillement aux interfaces entre l'intercalaire en matériau polymère et les substrats verriers qui lui sont juxtaposés soit inférieure à 3 MPa à 20°C.

12. Procédé selon l'une des revendications précédentes, **caractérisé en ce que** le panneau a une face principale d'aire supérieure à 3 m², voire supérieure à 4 m², voire supérieure à 5 m².

13. Procédé selon l'une des revendications précédentes, **caractérisé en ce que** après bombage et retour de l'intercalaire à la température de 20 °C, on évalue l'état des contraintes de cisaillement aux interfaces entre l'intercalaire en matériau polymère et les substrats verriers en appliquant un film polarisant sur une face principale du panneau puis en visualisant la couleur transmise au travers du panneau et du film.

## Patentansprüche

1. Verfahren zur Herstellung eines gebogenen Glasmoduls, umfassend eine metallische Verstärkung und eine Platte, umfassend eine Verbundverglasung, umfassend Glassubstrate, die durch eine Zwischenlage aus Polymermaterial getrennt sind, wobei die Platte nach dem Verbinden der Verbundverglasung mit einer Kraft gebogen wird, die sie die Form der metallischen Verstärkung annehmen lässt, dann in dieser Form von einem Haltemittel gehalten wird, **dadurch gekennzeichnet, dass** die Platte erhitzt wird, indem ein Heizelement an sie angelegt wird, und das Biegen durchgeführt wird, während die Zwischenlage eine Temperatur zwischen 30 und 80 °C aufweist.

2. Verfahren nach dem vorhergehenden Anspruch, **dadurch gekennzeichnet, dass** das Biegen durchgeführt wird, während die Zwischenlage eine Temperatur von mehr als 40 °C aufweist.

3. Verfahren nach einem der vorhergehenden Ansprüche, **dadurch gekennzeichnet, dass** das Biegen durchgeführt wird, während die Zwischenlage eine Temperatur von weniger als 75 °C aufweist.

4. Verfahren nach einem der vorhergehenden Ansprüche, **dadurch gekennzeichnet, dass** die Zwischenlage eine Temperatur aufweist, die über ihrer Glasübergangstemperatur während des Biegens liegt.

5. Verfahren nach einem der vorhergehenden Ansprüche, **dadurch gekennzeichnet, dass** die Zwischenlage ein PVB ist.

6. Verfahren nach einem der vorhergehenden Ansprüche, **dadurch gekennzeichnet, dass** mindestens ein Glassubstrat eine vorgespannte Glasscheibe umfasst.

7. Verfahren nach dem vorhergehenden Anspruch, **dadurch gekennzeichnet, dass** alle Glasscheiben aller Glassubstrate des Platte vorgespannt sind.

8. Verfahren nach einem der vorhergehenden Ansprüche, **dadurch gekennzeichnet, dass** das Heizelement eine Heizdecke ist.

9. Verfahren nach einem der vorhergehenden Ansprüche, **dadurch gekennzeichnet, dass** die Platte gleichzeitig entlang von zwei verschiedenen Richtungen gebogen wird.

10. Verfahren nach einem der vorhergehenden Ansprüche, **dadurch gekennzeichnet, dass** das Biegen zwischen 10 und 120 Sekunden dauert.

11. Verfahren nach einem der vorhergehenden Ansprüche, **dadurch gekennzeichnet, dass** die Platte gebogen wird, damit die Scherspannung an den Grenzflächen zwischen der Zwischenlage aus Polymermaterial und den Glassubstraten, die an sie angelegt sind, weniger als 3 MPa bei 20 °C beträgt.

12. Verfahren nach einem der vorhergehenden Ansprüche, **dadurch gekennzeichnet, dass** die Platte eine Hauptseite mit einer Fläche von mehr als 3 m² oder sogar mehr als 4 m² oder sogar mehr als 5 m² aufweist.

13. Verfahren nach einem der vorhergehenden Ansprüche, **dadurch gekennzeichnet, dass** nach dem Biegen und dem Zurückkehren der Zwischenlage auf die Temperatur von 20 °C der Zustand der Scherspannungen an den Grenzflächen zwischen der Zwischenlage aus Polymermaterial und den Glassubstraten bewertet wird, indem eine polarisierende Folie auf eine Hauptseite der Platte aufgebracht wird und dann die Farbe, die durch die Platte und die Folie übertragen wird, visualisiert wird.

## Claims

1. A process for the preparation of a bent glazed module comprising a metal framework and a panel comprising a laminated glazing comprising glass substrates separated by an interlayer made of polymer material, the panel being bent, after the laminated glazing has been assembled, by a force which causes it to take the shape of the metal framework and then held in this shape by a holding means, **characterized in that** the panel is heated by juxtaposing a heating element with the panel and the bending is carried out while the interlayer is at a temperature between 30 and 80°C.

2. The process as claimed in the preceding claim, **characterized in that** the bending is carried out while the interlayer is at a temperature of greater than 40°C.

3. The process as claimed in either of the preceding claims, **characterized in that** the bending is carried out while the interlayer is at a temperature of less than 75°C.

4. The process as claimed in one of the preceding claims, **characterized in that** the interlayer is at a temperature greater than its glass transition temperature during the bending.

5. The process as claimed in one of the preceding claims, **characterized in that** the interlayer is a PVB.

6. The process as claimed in one of the preceding claims, **characterized in that** at least one glass substrate comprises a sheet of tempered glass.

7. The process as claimed in the preceding claim, **characterized in that** all the glass sheets of all the glass substrates of the panel are tempered.

8. The process as claimed in one of the preceding claims, **characterized in that** the heating element is a heating blanket.

9. The process as claimed in one of the preceding claims, **characterized in that** the panel is bent simultaneously along two different directions.

10. The process as claimed in one of the preceding claims, **characterized in that** the bending lasts between 10 and 120 seconds.

11. The process as claimed in one of the preceding claims, **characterized in that** the panel is bent in order for the shear stress at the interfaces between the interlayer made of polymer material and the glass substrates which are juxtaposed with it to be less than 3 MPa at 20°C.

12. The process as claimed in one of the preceding claims, **characterized in that** the panel has a main face with an area of greater than 3 m², indeed even of greater than 4 m², indeed even of greater than 5 m².

13. The process as claimed in one of the preceding claims, **characterized in that**, after bending and returning the interlayer to the temperature of 20°C, the state of the shear stresses at the interfaces between the interlayer made of polymer material and the glass substrates is evaluated by applying a polarizing film to a main face of the panel and then by displaying the color transmitted through the panel and the film.
